# EUROPEAN PATENT APPLICATION

(11) **EP 1 258 314 A1**
(43) Date of publication of application: **20.11.2002**
(21) Application number: 01830311.5
(22) Date of filing: 17.05.2001
(51) Int. Cl.: B23Q 1/54, B23Q 1/66

(54) **Machine tool for machining workpieces of wood or similar materials**

(71) Applicant: Bacci Paolino Di Bacci Di Agostino, 56021 Cascina, Pisa (IT)
(72) Inventor: Ruggieri, Alberto, 56025 Pontedera, Pisa (IT)
(74) Representative: Mannucci, Michele

(57) **Abstract**

The machine tool includes: an operating head (13) movable along an axis of horizontal translation (X) and along an axis of vertical translation (Z), and oscillating around two oscillation axes (B, C); at least a means (29A; 29B) for supporting the workpieces being machined forming a supporting surface for said workpieces, carried by a slide (27A; 27B) movable along a second axis of horizontal translation (Y) along a guide system (25A; 25B) perpendicular to said first axis of horizontal translation (X); and a control unit (34) for the movements of said operating head and said slide. The supporting means rotates around a vertical auxiliary axis (Z1) brought into an off-center position with respect to said guide system (25A; 25B).

## Description

The present invention relates to a machine tool for machining wooden pieces, for example and in particular components for the production of chairs and other furniture articles, especially, but not exclusively elongated pieces.

Specifically, the present invention relates to improvements to a machine of the aforementioned type, including:
- an operating head movable along a first axis of horizontal translation and along an axis of vertical translation, and oscillating around two oscillation axes;
- at least a means for supporting the workpieces being machined forming a supporting surface for said workpieces, carried by a slide movable along a second axis of horizontal translation along a guide perpendicular to said first axis of horizontal translation;
- and a control unit for the movements of said operating head and said slide along said axes.

Examples of machine tools of this type are described in EP―A-0873817 and in EP―A―1002620. These known machines offer great flexibility and can execute a large number of mechanical machining in rapid sequence and according to processing programs that automate the manufacturing cycles. For example, it is possible to carry out machined truncation of elongated workpieces, drilling, comb-milling, contouring and the like by using tools positioned in various configurations and therefore with various inclinations. The workpieces to machine are clamped onto geometrical supporting surfaces with a rectangular shape that can rotate around an axis.

Despite their elevated flexibility, both of these machines demonstrate some limitations in the machining they can do as well as some constructional inconveniences.

For example, in executing truncation, drilling and teoning on the ends of elongated workpieces, the machine described in EP―A―0873817 cannot reach one of the four sides of the rectangular supporting surface of the workpieces. This limits the flexibility of the machine. A similar limitation is found in the machine described in EP―A―1002620. Furthermore, the workpieces to machine can be machined by the tools by positioning the respective tool-carrying spindles both above and below the surface on which the workpieces are placed. However, especially for what concerns the machining done with the spindles below the plane or repose surface, both of the known machines demonstrate limitations. This means that some machining done on the surfaces of the workpieces turned towards the ground are not allowed and require double positioning when the workpieces must be machined on more of their surfaces.

The workpieces of wood or other material, especially workpieces used in constructing chairs, sofas, or other furniture, often require turning processes, namely milling using form cutters along the edges of the workpieces. Especially when machining wood, it is important that milling is done in a certain tool rotational direction to prevent the material from splintering, caused by fibers in the material running in a certain direction. This is why it is often useful to perform turning machining by making use of a tool-carrying spindle alternatively above or below the workpiece positioning surface. The machines described EP―A-0873817 and in EP―A―1002620 do not allow free execution of these types of machining along any side of the workpiece with the spindle positioned below the workpiece to machine.

Furthermore, some of the known machines have limitations in relation to the axial dimension of the spindles and the tools, which cannot exceed certain limits imposed by the position of the supporting surface for the workpiece with respect to the translation guide of the surfaces themselves.

During the machining processes executed by these machines, for example milling, drilling, turning, truncating and similar processes, chips and scrap are produced that must be periodically or constantly removed with a suction systems, conveyor belts or other devices. Contrarily, the accumulation of chips and scraps could compromise the proper operation of the machine and obstruct the movement of the various organs that make it up, for example, due to scraps and chips depositing on the sliding guides. In the machines currently available on the market that offer similarly high levels of workpiece machining flexibility, there is the drawback that scraps and chips are produced and accumulate in various areas around the supporting surface. This requires the presence of complex and expensive chips and scraps removal systems.

In reference to the summary description above, the purpose of the present invention is the construction of a machine tool or work station for machining workpieces especially, but not exclusively, in wood for the production of furniture such as chairs, settees, sofas, tables and the like, which can overcome the drawbacks and limitations inherent in the so far existing machines.

More specifically, an object of the present invention is to construct a machine that is able to execute all the machining processes on a workpiece on all the four sides of a rectangular supporting surface (ideal or physical) for the workpieces.

A further object of the present invention is the realization of a machine that can be equipped with spindles even of elevated dimensions that can process workpieces also by positioning the spindles below the positioning surface of the workpieces, namely among these latter and the floor on which the machine is supported.

Still a further object of the present invention is the construction of a machine tool in which the scraps and chips are collected in a limited number of areas to facilitate their collection and removal, reducing the costs of the scrap removal systems.

It is an object of the invention also to provide a machine tool of the aforementioned type that enables execution of the greatest possible number of machining processes while maintaining the supporting surface of the workpieces horizontal.

An object of the invention is also to provide a machine that enables elevated flexibility while avoiding the drawbacks inherent in the known machines without necessitating an increase in the number of numeric-control axes or with a limited increase in these types of axes.

These and other objects and advantages, which will appear clear to the persons skilled in the art after reading the ensuing text, are attained in a machine tool of the type defined in the beginning, wherein the means for supporting the workpieces rotates around a vertical auxiliary axis brought into an off-center position with respect to said guiding system.

With this positioning, workpieces can be machined on every side with a rotation if necessary around the vertical auxiliary axis. Furthermore, the misalignment or off-centering of the vertical auxiliary axis of oscillation or rotation of the means of the support of the workpieces enables the collection of scraps and chips in a single area with the consequent advantage of easy removal. With sufficient off-centering, the scraps and chips fall beyond the volume of the guide system of the slide that carries the supporting means for the workpiece and thus prevents possible problems due to the presence of chips and scraps on the guides.

In practice, the supporting surface for the workpieces is rectangular. It is off-centered with respect to the guide system of the slide that carries it to such a size for which in the plane projection, at least one edge of said surface is found beyond the area of the guide system. In this way, with appropriate sequential machining and rotations around the vertical auxiliary axis of the supporting surface, the machine can process workpieces from all sides of the supporting surface while letting the chips and scraps fall always beyond the area of the guide system. Preferably, the off-centered nature of the supporting surface and therefore, the vertical auxiliary axis of rotation with respect to the guide system of the slide will be such that the supporting surface is carried by said slide in a way that in a plan view it results beyond the area of this guide system.

The vertical auxiliary axis can be an axis around which the supporting means assume two or more pre-set positions by means of limit switches or other devices. Alternatively and preferably, this axis can be a numeric-control axis, such that any angular position of the supporting means around said axis can be achieved.

Preferably, the machine tool will have two supporting means, carried by respective moveable slides along said second axis of horizontal translation along respective mutually parallel guide systems. The two supporting means rotate around respective vertical auxiliary axes (Z1) positioned between the two guide systems of the two slides.

The machine tool may also provide possibility of making the support means for the workpieces oscillate or rotate around another auxiliary axis, in this case a horizontal axis parallel to the first axis of horizontal translation.

Further advantageous characteristics and embodiments of the machine according to the invention are set forth in the attached claims and will be described in reference to the enclosed drawings.

The invention will be easier to understand by following the description and the annexed drawing, which illustrates non-limiting practical embodiments of the invention. Specifically, in the drawings:
Fig. 1 is a plan view of the machine according to the invention, in a first embodiment;
Fig. 2 is a front view taken along the line II-II of Fig. 1;
Fig. 3 is a side view taken along the line III-III of Figs. 1;
Figs. 4 to 7 illustrate contouring works that can be done with the machines in Figs 1 to 3;
Fig. 8 is a plan view analogous to the view in Fig. 1 of a machine according to the invention in a different embodiment;
Fig. 9 is a view taken along IX ―IX of Fig. 8 and
Fig. 10 is an analogous view of the Figs. 2 and 9 of a third embodiment of the machine according to the invention.

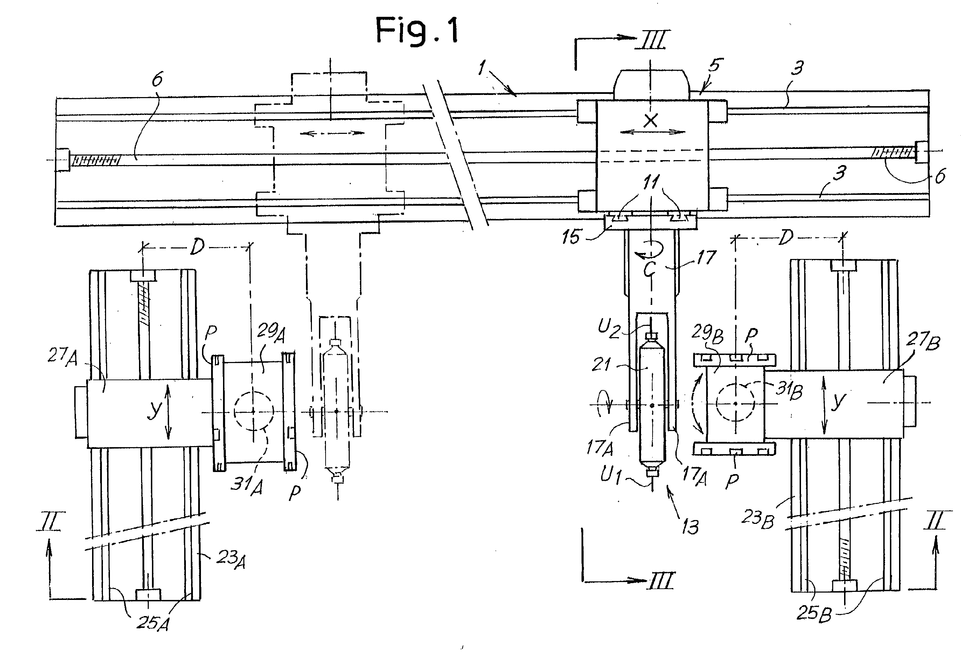

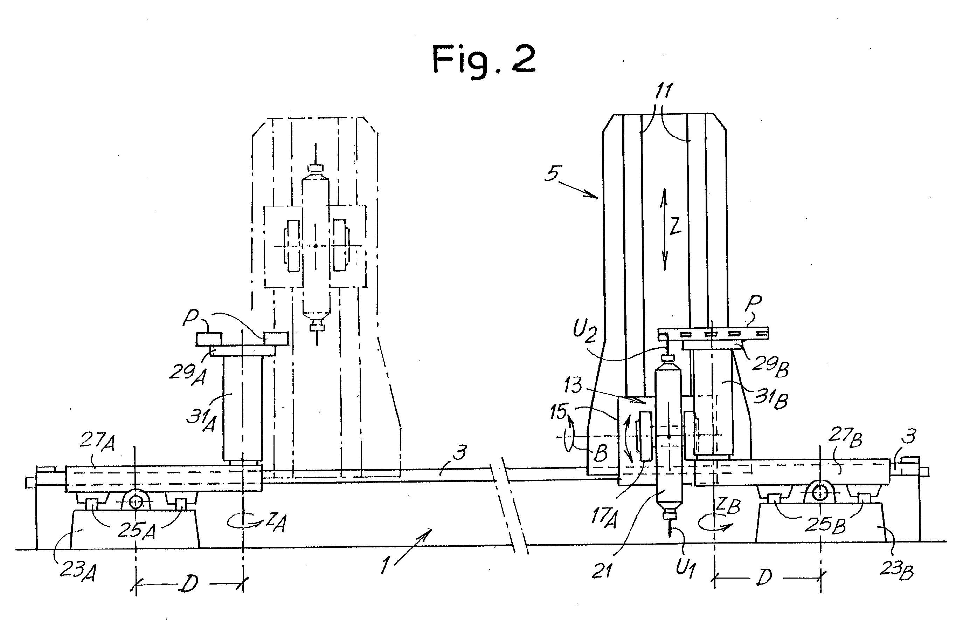

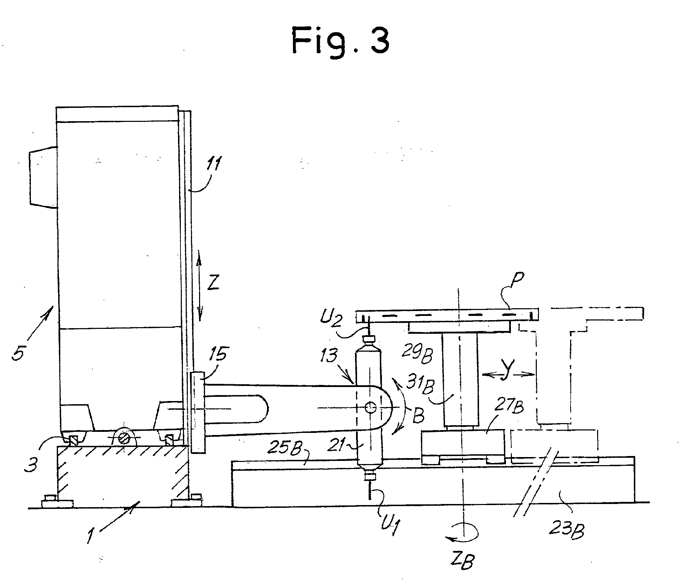

With reference first to Figs. 1 to 3, the machine tool has a base 1 on which a guide 3 is positioned, along which an operating unit, generically designated 5, slides. X designates a numeric-control axis of horizontal translation along which the operating unit 5 moves while translating along guides 3. The movement is obtained in a manner known per se, for example by a threaded rod 6 along the base 1, engaged by a nut screw linked to the operating unit 5 and not shown. In Fig. 1 and Fig. 2, the solid line and dotted line, respectively, illustrate two possible positions of the operating unit 5.

On the operating unit is arranged a second vertical guide 11 along which a slide or carriage 15 translates. The movement can be imparted, similarly to the movement along guide 3, by a threaded rod engaged in nut screw integral with slide 15. Z designates the numeric-control vertical translation axis along which the slide 15 moves when it translates along guides 11.

The slide carries an arm 17 ending with a fork 17A that supports an operating head generically designated with 13, with a double spindle 19 equipped with two tools U1 and U2. Different spindles can be used, for example, either quadruple spindles or simple ones. The spindle 21 rotates around an axis of oscillation or rotation designated B, while the arm 17 rotates or oscillates around an axis designated C. The two axes B and C are numeric-control, analogous to the axes X and Z.

In summary, the operating head 13 moves along four numeric-control axes: two axes of translation designated X and Z (respectively horizontal and vertical) and two axes of oscillation or rotation, B and C.

Perpendicular to the base 1, there are two other parallel bases 23A and 23B, on which the respective guides 25A and 25B are mounted. Respective slides 27A and 27B translate along guides 25A and 25B. Y designates the numeric-control axis along which the slides 27A and 27B move when they translate along the guides 25A, 25B.

Each slide 27A and 27B is equipped with a table 29A, 29B having a rectangular shape and forming a supporting surface for the workpieces to machine. On table 29A or 29B, workpieces to machine P in various forms can be clamped by means known per se. For example, in Fig. 1 two elongated elements are positioned on table 29A, which have a long side greater than the longer side of the rectangular table 29A. Said workpieces are arranged parallel to the longer sides of the table itself. Vice versa, on table 29B are placed two smaller elements which are of equal or slightly greater dimensions than the shorter side of the table. These are applied in parallel to said shorter sides and are more or less in correspondence with them. The workpieces represented in Fig. 1 are only shown as examples. It should be understood that workpieces having different forms and dimensions can be machined with the machine according to the invention.

As can be seen in Figs. 1 to 3, the tables 29A and 29B are both supported by respective vertical uprights 31A and 31B. The vertical uprights 31A and 31B are mounted on slides 27A and 27B in order to rotate or oscillate integral with the respective tables 29A and 29B around the respective vertical auxiliary axes designated ZA and ZB, respectively, for the two uprights. The rotation or oscillation movement of the vertical uprights 31A and 31B around the axes ZA and ZB can be a numeric-control movement, controlled by the same control unit that controls the movements along the axes X, Y, Z, B and C. This control unit is schematically designated with 34 in Fig. 1 and omitted in the remaining figures. Alternatively, the movement of the uprights can be controlled by a simple actuator combined with two or more switches or end stops to make the uprights and the respective tables assume one or the other of a limited series (even just two) of angular positions around the respective vertical auxiliary axis ZA or ZB. For example, two 180° staggered angular positions can be envisaged and two simple end stops.

The movement of oscillation or rotation of each of the tables 29A, 29B and the uprights 31A, 31B integral with these can be obtained with a brushless motor or other actuator with a pinion meshing with a toothed crown integral with the respective upright. These means are not illustrated in the drawing for the sake of simplicity. If the movement is not controlled with numeric-control means along an interpolated axis (as are the movements along the axes X, Y, Z, B, and C) a simpler actuator can be used, such as, for example, a hydraulic or pneumatic cylinder-piston.

As can be seen in Figs. 1 to 3, each of the axes ZA and ZB are off-center with respect to the center line of the guide system 23A, 25A, 23B, 25B. In other words, the axes ZA and ZB do not lie on the vertical plane that encompasses the center line of the guide system. Contrarily, in the example illustrated, each axis ZA and ZB is located in such a position that in the plan view (Fig.1) its path falls beyond the base 23A or 23B respectively. D designates the distance between the ZA and ZB axes and the vertical plane of the center line of the respective guide system, namely in this case, the plane of symmetry of the base 23A or 23B. This distance is such that in the plan view (Fig.1), each table 29A, 29B is located beyond the area surrounding the relative base 23A, 23B.

The two tables 29A, 29B are placed alternatively either in an operational position, in proximity to base 1, or in a loading or unloading position distant from the base 1. This offers the possibility of operating in a swinging cycle, or in other words, carrying out the processing on the workpieces clamped onto one of the two tables, while the other table is positioned in a loading or unloading position where an operator or even a mechanical device will be responsible for removing the finished workpieces and positioning new workpieces to process. Fig.1 shows in a very diagrammatic way the two tables in intermediate positions along their movement along the second axis of horizontal translation Y.

With this particular arrangement of the tables 29A and 29B with respect to the respective slide 25, 25B, many advantages are obtained.

The off-centered position of axis ZA or ZB with respect to the center line plane of the relative guide system makes it possible for the scraps and chips generated by the machining to fall in the area between the two bases 23A and 23B and so they don't fall along guides 25A and 25B nor on the opposite side of the base. This simplifies the structure of the means of removing the scraps and chips, whatever method may be used, and furthermore, prevents the risk of damage to the mechanical structure of the guides 25A and 25B and the slides 27A, 27B. Observe that in the configuration illustrated in Figs. 1 to 3, since in the plan view the entire perimeters of tables 29A, 29B are outside the volume of the guide system along axis Y, it is possible to carry out all the machining along three sides of the table without rotating the table itself around axis ZA or ZB and also by making the scraps and chips fall beyond the guide system and between the two bases 23A and 23B. However, even if the distance D was also lesser and such that the plan view of the table 29A or 29B should overlap with the guide system 23A, 25A, 23B 25B, the advantage of preventing the scraps from falling on the guide system itself could still be obtained in any case by carrying out appropriate rotations of the table 29A and 29B and using the operating head 13 to carry out the machining along the portion of the edge or along the edge of the table that is found (in the plan view) beyond the volume of the guide system. It is clear that the arrangement of Figs. 1 to 3, with a higher distance D bears greater advantage since it reduces the number of rotations to carry out with the table 29A, 29B (or even eliminates them completely) thereby reducing the time for each machining cycle. Furthermore, the programming of the machining cycles becomes simpler since machining can be programmed for a mirror image on the two sides of an ideal vertical plane containing the axis ZA or ZB.

A rotation around the axis ZA, ZB is made necessary only in order to machine along the fourth side (the one that in Fig. 1 appears parallel to axis X and is opposite with respect to base 1).

Furthermore, by moving the volume of the plan view of the table 29A or 29B beyond the corresponding volume of the guide system, machining of the workpieces with the operating head 13 positioned below the workpiece supporting plane is facilitated, since there is a greater amount of space for movement of the head. In fact, (contrary to some machines of the prior art) the volume of the base 23A and 23B is eliminated, which volume would reduce the height available for the operating head.

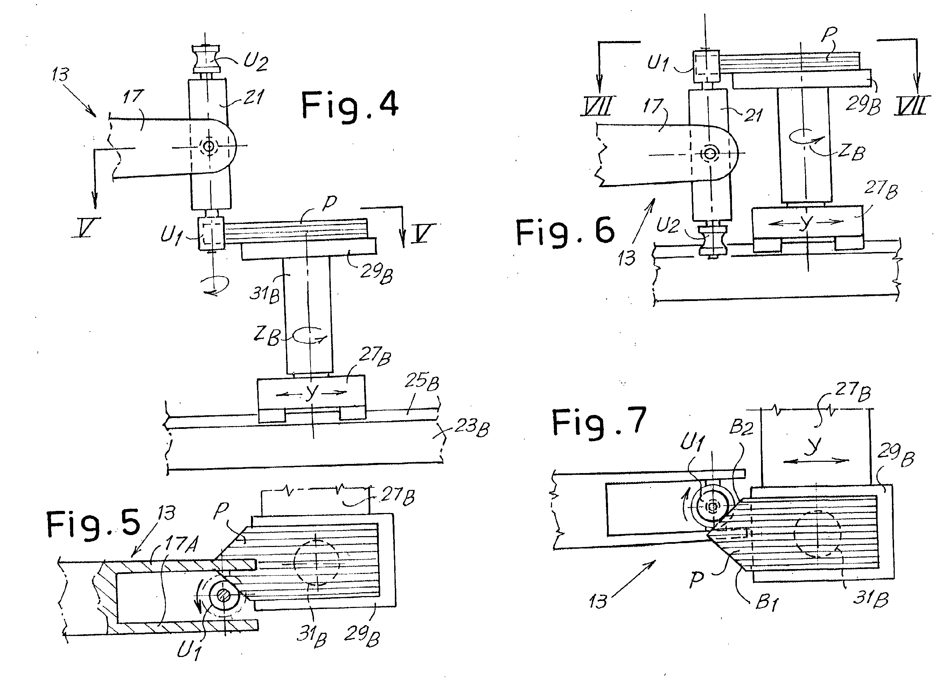

This also enables the use of larger spindles and therefore of larger operating heads and the possibility of carrying out turning or comb-milling while positioning the spindle either above or below the workpiece repose plane. This possibility is clearly illustrated in the Figs. 4 to 7, where the Figs 4 and 6 are side views and the Figs 5 and 7 are plan views taken along V-V and VII-VII respectively.

The workpiece to process is again designated P and the direction of the fibers (for example, if the workpiece to process is wood) is represented schematically with lines. In the figures, the direction of the rotation of the tools U1 and U2 are indicated, supported by the same double spindle 21. The direction of the rotation is always appropriate so as not to splinter the workpiece P and therefore must be inverted when changing from a turning operation on the edge B1 to turning operation on the edge B2 (Fig. 7). This inversion is obtained by passing the spindle from a position above to a position below the workpiece position plane, namely the supporting plane defined by the table 29A.

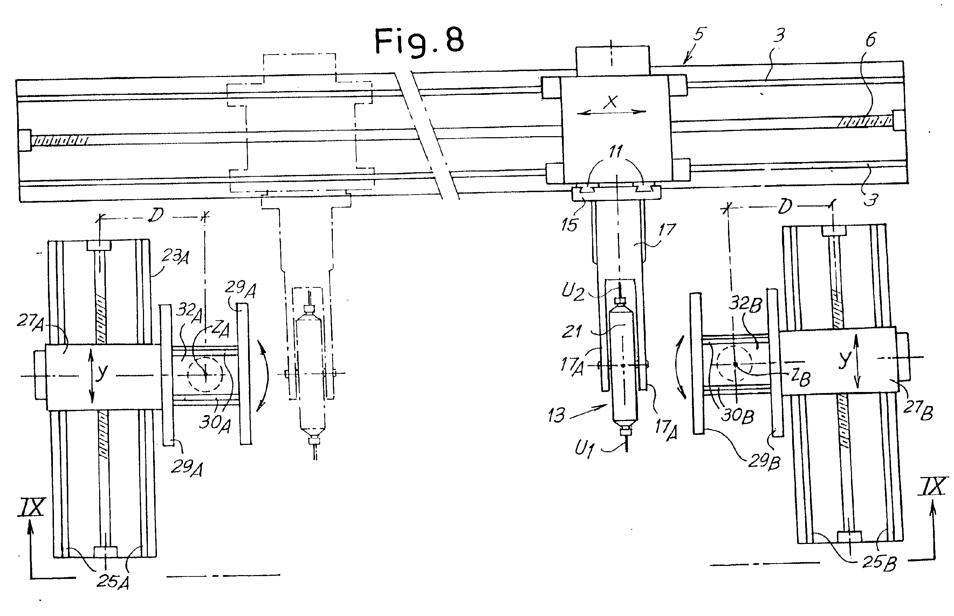

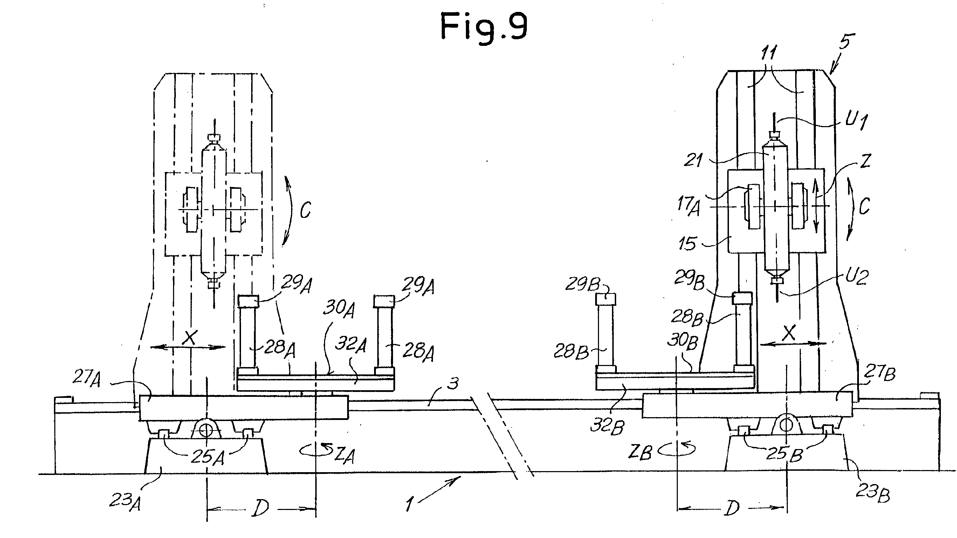

The Figs 8 and 9 illustrate a plan view and a front view of a different embodiment of the machine according to the invention. The same reference numbers designate identical or equivalent parts with respect to the embodiment shown in the Figs.1 to 3.

As can be seen in detail in Fig. 9, this embodiment differs from the previous one in that the supporting plane for the workpiece to machine is defined by a pair of beams again designated with 29A and 29B for each of the two slides 27A, 27B. The two pairs of beams define an ideal rectangular supporting surface. This surface has a variable dimension since the distance between the two beams of each pair 29A, 29A and 29B, 29B is variable. For this purpose, each of the four beams is supported by a respective upright. The uprights of the two pairs are indicated with 28A, 28A and 28B, 28B, respectively. These uprights can be adjusted along respective guides 30A, 30B integral with respective plates 32A, 32B. These latter are rotatably supported by the slides 27A, 27B around the axes ZA and ZB.

In this manner the distance between the beams 29A, 29A and 29B, 29B can be adjusted, with the consequent possibility to modify the lay out of the ideal rectangular supporting surface of the workpieces to machine, in the sense that this surface offers the possibility of regulating one of the two dimensions.

As can be seen in the figures, the distance D between the axis ZA or ZB and the corresponding vertical center line plane of the respective guide systems 23A, 25A; 23B, 25B is such that in the plan view, the volume of the supporting surface delimited by the beams 29A, 29A and 29B, 29B is always external to the volume of the relative guide system, even when the beams 29A, 29A and 29B, 29B of each pair assume the maximum reciprocal distance, i.e. the position shown in the drawing.

Even in this case, it is possible to hypothesize a lower distance D with the consequent reduction in the advantages.

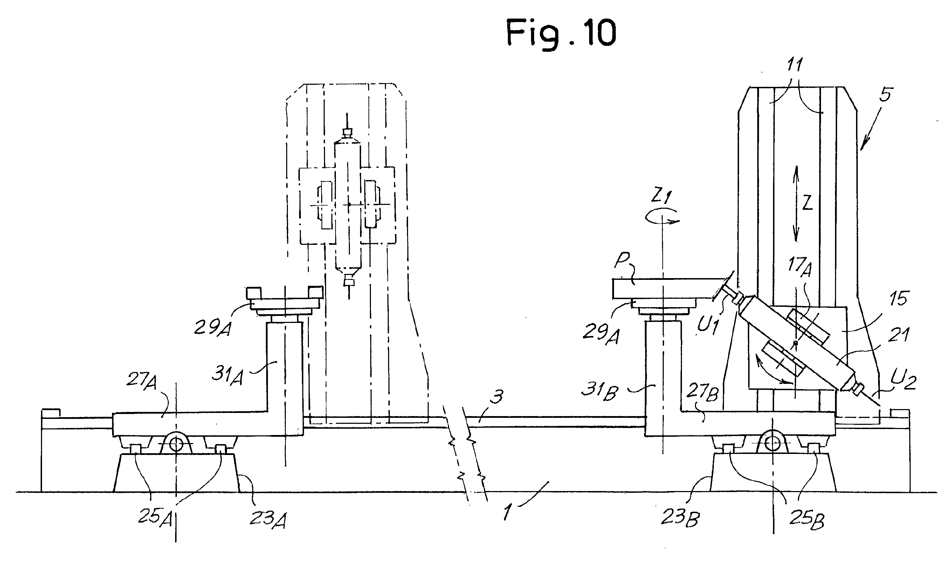

In Fig. 10 a further embodiment of the machine according to the invention is illustrated. The identical numbers again indicate identical or corresponding parts as those in the previous examples of configurations. In this embodiment the uprights 31A, 31B that carry tables 29A, 29B are rigidly integrated with the respective slides 27A, 27B, while the tables are supported by the uprights so as to be able to rotate or oscillate with respect thereto around the axes ZA, ZB respectively.

Fig. 10 also illustrates the possibility offered by the machine according to the present invention to carry out machining with the tools positioned below the workpiece supporting plane and with the axes inclined with respect to the horizontal plane, even when the operating head 13 is found above the bases 23A, 23B.

The machine can carry out operations on the various sides of the workpiece, by keeping this latter into a horizontal position. This will ensure greater stability in clamping a workpiece, for instance, when this is obtained using vacuum means. Should an unexpected lack of suction arise, in fact, the workpieces will not fall from the supporting plane. Moreover, the centrifugal action of the disk-shaped cutting tools used for carrying out truncation is reduced compared with the action when the workpieces are applied on a vertical plane, since in this case the scraps generated by the cut would burden the blade with their weight and would consequently be flung at a remote distance by the centrifugal action.

It is understood that the drawing shows only practical and not limiting embodiments of the invention, which can vary in the forms and arrangements without departing from the scope of the concept underlying the invention, as defined in the claims that follow. The presence of reference numbers in the claims does not limit the scope of the protection thereof and its purpose is only of facilitating the reading of the claims reference being made to the description and the illustrations.

## Claims

1. A machine tool for machining workpieces (P) of wood or similar material comprising:
• an operating head (13) movable along an axis of horizontal translation (X) and along an axis of vertical translation (Z), and oscillating around two oscillation axes (B, C);
• at least a means (29A; 29B) for supporting the workpieces being machined forming a supporting surface for said workpieces, carried by a slide (27A; 27B) movable along a second axis of horizontal translation (Y) along a guide system (25A; 25B) perpendicular to said first axis of horizontal translation (X);
• and a control unit (34) for the movements of said operating head and said slide;
**characterized in that** said means rotates around a vertical auxiliary axis (Z1) brought into an off-center position with respect to said guide system (25A; 25B).

2. Machine tool according to Claim 1, **characterized in that** said supporting surface has a rectangular shape.

3. Machine tool according to Claim 2, **characterized in that** the off-center nature of the vertical auxiliary axis (Z1) with respect to said guide system is such that in the plan view at least one portion of the perimeter of said surface is outside the volume of said guide system.

4. Machine tool according to Claim 3, **characterized in that** at least half of the perimeter of said surface is found beyond the volume of said guide system.

5. Machine tool according to Claim 1, 2, 3, or 4, **characterized in that** said supporting surface is supported by said slide in such a way that in the plan view it is outside of the volume of said guide system.

6. Machine tool according to one or more of the previous claims, **characterized in that** said vertical auxiliary axis (Z1) is a numeric-control axis controlled by said control unit (34).

7. Machine tool according to one or more of the previous claims, **characterized in that** said supporting means includes a plate (32A; 32B) supported by said slide (27A; 27B) and rotates around said vertical auxiliary axis (Z1) on which at least one upright (28A; 28B) is mounted, said supporting surface for the workpieces being above said upright.

8. Machine tool according to Claim 7, **characterized in that** on said plate two side-by-side uprights (28A, 28A; 28B, 28B) are positioned whose relative distance is adjustable.

9. Machine tool according to one or more of the previous claims, **characterized in that** the supporting surface for the workpieces is positioned at such a height that the operating head can work the workpiece or workpieces placed on it from the bottom.

10. Machine tool according to one or more of the previous claims, **characterized in that** it includes two supporting means, carried by respective slides (27A; 27B) moveable along said second axis of horizontal translation (Y) along respective parallel guide systems (23A, 25A; 23B, 25B), and that two supporting means rotate around the respective vertical auxiliary axes (Z1) positioned between the two guide systems of the two slides.

11. Machine tool according to Claim 10, **characterized in that** said two vertical auxiliary axes are both numeric-control axes, controlled by said control unit.

12. Machine tool according to one or more of the previous claims, **characterized in that** said supporting means rotate around a respective horizontal auxiliary axis of oscillation parallel to said first axis of horizontal translation (X).

13. Machine tool according to Claim 12, **characterized in that** said horizontal auxiliary axis of oscillation is controlled by said control unit.
